# EUROPÄISCHE PATENTANMELDUNG

(11) **EP 1 547 987 A2**
(43) Veröffentlichungstag der Anmeldung: **29.06.2005**
(21) Anmeldenummer: 04030424.8
(22) Anmeldetag: 22.12.2004
(51) Int. Cl.: C04B 28/02, C04B 24/08

(54) **Zement zur Erzeugung von Betonwaren mit verminderter kapillarer Wasseraufnahme und Verfahren zu seiner Herstellung**

(30) Priorität: 23.12.2003 DE 10360838
(71) Anmelder: HeidelbergCement AG, 69120 Heidelberg (DE)
(72) Erfinder: Bolte, Gerd, 69117 Heidelberg (DE); Dienemann, Wolfgang, 69256 Mauer (Baden) (DE); Härdtl, Reiner, 69151 Neckargemünd (DE); Thrul, Meinhard, 92318 Neumarkt (DE)
(74) Vertreter: Wagner, Jutta, Dr.

(57) **Zusammenfassung**

Die vorliegende Erfindung betrifft einen Zement zur Erzeugung von Betonwaren mit verringerter Ausblühneigung, enthaltend ein Hydrophobierungsmittel, welches eine Kombination aus einem Alkali- oder Erdalkali- oder Aluminiumsalz einer Fettsäure und einem Alkalisalz einer ungesättigten Fettsäure ist. Weiterhin betrifft die Erfindung die Herstellung eines solchen Zementes durch trockenes Vermischen eines festen Hydrophobierungsmittels mit dem gemahlenen Zement.

## Beschreibung

Die vorliegende Erfindung betrifft Zemente mit verminderter Ausblühneigung sowie ein Verfahren zu deren Herstellung.

Weiße Ausblühungen auf Betonwaren stellen eine oft beobachtete Beeinträchtigung der Qualität dar. Sie gehen von weißlichen Schleiern bis hin zu dicken weißen Krusten, die die Oberfläche überziehen. Sie sind um so besser sichtbar je dunkler der Hintergrund ist. Bei eingefärbten Produkten, die in den letzten Jahren immer mehr an Bedeutung gewinnen, führt der weiße Schleier dazu, dass die Farben nicht brillant, sondern eher milchig trüb wirken.

Ausblühungen werden darauf zurückgeführt, dass Wasser in das Bauteil bzw. Bauwerk eindringt, Bestandteile des Zementes auswäscht und beim Trocknen auf der Oberfläche zurücklässt. Zur Verringerung der Ausblühneigung sollte daher die Wasseraufnahme der Betonware verringert werden. Ein Maß für die Ausblühneigung ist somit die kapillare Wasseraufnahme eines mit einem zu prüfenden Zement hergestellten Betonware, die anhand von Probeköpern geprüft werden kann.

Im Stand der Technik sind bereits verschiedene Möglichkeiten zur Verminderung der Ausblühneigung bei Bauteilen und Bauwerken aus Zement bekannt. Diese beruhen auf einer Hydrophobierung der Betonoberfläche. Dadurch kann Wasser erst gar nicht eindringen und Ausblühungen werden verhindert.

Die Hydrophobierung kann einerseits durch hydrophobierende Betonzusatzmittel erfolgen und andererseits mittels einer Oberflächenbehandlung des fertigen Produkts als solchem erreicht werden, vgl. Beton u. Fertigteiltechnik, Heft 11/2000, Seiten 44 - 50.

Eine nachträgliche Hydrophobierung durch Oberflächenbehandlung bringt verschiedene Probleme mit sich. So ist eine gleichmäßige und ausreichende Behandlung schwierig zu gewährleisten, insbesondere bei Bauteilen mit komplizierten Formen, die Aufbringung kann z.B. bei sehr hohen Bauten, Brücken etc. oder bei zumindest teilweise im Erdreich befindlichen Teilen problematisch sein.

In solchen Fällen ist eine innere Hydrophobierung des Bauteils oder Bauwerkes vorzuziehen.

Die DE 1646502 offenbart einen hydrophoben Zement, der zur Bodenverfestigung bestimmt ist. Dieser Zement wird durch gemeinsames Vermahlen von Zementklinker, Zusatzstoffen und einem Hydrophobierungsmittel, welches aus stark verzweigten, vorwiegend tertiären, gesättigten, aliphatischen Monocarbonsäuren besteht, hergestellt oder alternativ durch nachträgliches Aufbringen des Hydrophobierungsmittels, insbesondere durch Aufsprühen, auf den gemahlenen Zement. Hierdurch werden die Zementpartikel als solche hydrophobiert. Die Benetzbarkeit der Zementpartikel ist herabgesetzt. Dies wirkt sich nachteilig auf das Abbindeverhalten aus, in der Regel ist die Erstarrungszeit verlängert und die Frühfestigkeit vermindert. Auch stellt ein solcher Zement hinsichtlich Transport und Verarbeitung besondere Anforderungen, da er ein extrem gutes Fließvermögen besitzt.

Ein ähnliches Bindemittel für Spritzbeton beschreibt die DE 298 24 278 U1. Gemäß dieser Schrift sollen die Bindemittelkörnchen zumindest teilbereichsweise eine Umhüllung aus einem Hydrophobierungsmittel und einem alkalifreien Beschleuniger aufweisen, so dass die Abbindereaktion erst dann einsetzt, wenn diese Umhüllung beim Auftreffen des Spritzbeton auf die Wand zerstört wird. Die ansonsten nachteilige Abbindeverzögerung ist für diese Anwendung also gerade erwünscht. Als Hydrophobierungsmittel werden Stearinsäure, Ölsäure, Wachse, Fettsäuresalze, Harze, Mineralölemulsionen, Silane, Siloxane und Silikonöle vorgeschlagen.

Beide vorgenannten Dokumente beschreiben das Hydrophobieren eines Bindemittels. Das weiter zu verarbeitende Material "Bindemittel" wird somit wasserabweisend und nicht notwendig auch die aus dem Bindemittel gefertigte Betonware.

Der Einsatz von quellfähigen Tonen, z.B. Bentonit, ist auch bekannt, jedoch hinsichtlich der Frostbeständigkeit des Betons bedenklich.

Weiterhin ist ein Zusatz von Hydrophobierungsmitteln bei der Anmischung des Zementes mit Wasser direkt vor der Verarbeitung bekannt. Als geeignete Hydrophobierungsmittel werden z.B. in der WO 00/23393 Alkalisalze von Fettsäuren mit 8 - 16 C-Atomen beschrieben oder in EP 1 160 219 eine Additivzusammensetzung aus einem den Wasserbedarf reduzierenden Zusatz und einer Verbindung der Formel R-O-(AO)ₙ-H, bei der R für H oder Alkyl, A für Ethylen oder Propylen und n für eine Zahl von 1 oder mehr steht.

Auch Zementadditive mit mehreren hydrophobierenden Komponenten sind bekannt. Die EP 846 668 beschreibt wasserabweisende Zusammensetzungen aus Organosilikonverbindungen und Polybutylen mit funktionellen Gruppen als Additiv.

In EP 1 149 808 wird ein Zementadditiv zur Verbesserung der Fließfähigkeit und Verminderung der Rissbildung vorgeschlagen, welches eine Mischung aus einem Polyalkylenglykol und einem auf Polyalkylenglykolmono(meth)acrylat und ungesättigten Carbonsäuren basierenden Copolymer enthält. Die Schrift enthält auch eine umfängliche Auflistung möglicher weiterer Bestandteile des Additivs. Als Hydrophobierungsmittel sind Fettsäuren oder deren Salze, Silikone, Paraffin, Asphalt und Wachs genannt. Dazu können als Entschäumer (a) Kerosin, flüssige Paraffine, (b) pflanzliche und tierische Fette, Sesamöl, Castoröl und Oxyalkylenadditionsprodukte davon, (c) Ölsäure, Stearinsäure und deren Alkylenoxidadditionsprodukte, (d) Glycerolmonoricinsäureester, Alkenylsuccinsäure und ihre Derivate, Sorbitolmonolaurinsäureester, Sorbitoltrioleinsäureester oder natürliche Wachse, (e) Oxyalkylenbasierende Entschäumer, (f) Alkohol-basierende Entschäumer, (g) Amidbasierende Entschäumer, (h) Phosphorsäure-basierende Entschäumer, (i) Metallseifen-basierende Entschäumer, oder (j) Silikonbasierende Entschäumer enthalten sein. Gemäß Beispielen soll das Additiv im Anmachwasser gelöst werden.

Die DE 100 49 072 offenbart hydrophobierende Pulver, die mindestens einen Carbonsäureester und insbesondere ein carbonsäurehaltiges redispergierbares Dispersionspulver und eine mit mindestens einem Carbonsäureester gecoatete Kieselsäure enthalten.

Aus US 6,537,366 ist eine Betonzumischung mit verbesserter Beständigkeit und Ausblühverminderung bekannt, die einen Farbstoff enthält. Die Mischung umfasst ein hydrophobes Mittel zur Ausblühverminderung, welches ausgewählt ist unter Calciumstearat, Zinkstearat, Natriumstearat, Butylstearat, Stearinsäurederivaten, Stearinsäuresalzen und Mischungen davon, sowie ein partikelförmiges Polymer, welches ausgewählt ist unter Styrol-basierenden Polymeren und Copolymeren, Acryl-basierenden Polymeren und Copolymeren, Polyvinylacetaten, Polyepoxiden, Polyurethanen, Butadienkautschuk und Mischungen davon, und einen Farbstoff.

Nachteilig an all diesen Additiven ist, dass sie auf der Baustelle zugemischt werden und damit auch dort zu dosieren sind. Additive werden daher überwiegend als flüssige Zubereitung angeboten, weil Flüssigkeiten leichter abgemessen werden können. Um die Additive in flüssiger Form anbieten zu können sind Zusätze nötig. Solche Zubereitungen haben aber den Nachteil, dass die zur Herstellung zugefügten Zusätze, wie z.B. Triethanolamin, sich negativ auf die Verarbeitbarkeit und die Druckfestigkeitsentwicklung auswirken können (stärkeres Ansteifen) und unter Umständen das Entstehen von braunen Verfärbungen begünstigen.

Der Erfindung liegt daher die Aufgabe zugrunde, einen Zement mit verminderter Ausblühneigung bereitzustellen, welcher die Produktion von ausblühfreien Betonwaren und Bauten vereinfacht und die vorgenannten Nachteile nicht aufweist.

Überraschend wurde gefunden, dass eine Mischung aus Zement, einem Alkalioder Erdalkali- oder Aluminiumsalz einer Fettsäure und einem Alkalisalz einer ungesättigten Fettsäure die gestellte Aufgabe löst.

Erfindungsgemäß wird dieser Zement mit verminderter Ausblühneigung hergestellt, indem man zunächst den Zementklinker, insbesondere Portlandzementklinker, mit Gips und optional weiteren Zusätzen wie Hüttensand vermahlt und die hydrophobierenden Zusätze anschließend trocken zumischt. In der Mischung liegen die Partikel nebeneinander vor, so dass weder das Fließverhalten noch die Abbindung negativ beeinflusst wird.

Die Zumischung erfolgt nach dem Ermahlen, gegebenenfalls vor vorzugsweise aber nach dem Sichten und vor der Einlagerung im Silo bzw. direkt vor der Abfüllung/Verladung. Überraschenderweise wurde festgestellt, dass wenn die o. g. Zusatzmittel im Zementwerk zwischen Mühle und Verladung zudosiert werden, diese in kleineren Dosierungen mit geringeren (keinen) Nebenwirkungen die Bildung von Ausblühungen vermindern und darüber hinaus die Verdichtbarkeit des Betons verbessern.

Der Begriff Zement umfasst im Rahmen der vorliegenden Erfindung sowohl Portlandzement als auch Zement mit Zumahlstoffen wie Hüttensand, Flugasche, Silikastäuben, Metakaolin, Perlit und Gemischen von zwei oder mehreren dieser Stoffe. Typische Zusammensetzungen bewegen sich in den folgenden Grenzen, wobei die Anteile sich selbstverständlich zu 100 % summieren müssen:

| | |
|---|---|
| 5-100% | Klinker |
| 0 - 65 % | Hüttensand, maximal 95 % |
| 0 - 35 % | Flugasche, maximal 55 % |
| 0 - 10 % | Silikastaub, maximal 55 % |
| 0 - 35 % | natürliches oder getempertes Puzzolan, maximal 55% |
| 0 - 20 % | Kalkstein, maximal 35 % |
| 0 - 5 % | Nebenbestandteile |

Das in der erfindungsgemäßen Mischung enthaltene Alkali- oder Erdalkali- oder Aluminiumsalz einer Fettsäure ist vorzugsweise ein Salz einer gesättigten, unverzweigten Fettsäure mit 12 bis 18 C-Atomen. Besonders bevorzugt sind das Calcium, Aluminium oder Magnesiumsalz von Stearin-, Laurin- und/oder Palmitinsäure, insbesondere Calciumstearat. Auch Salze von Fettsäuregemischen, wie sie beispielsweise aus natürlichen Ölen bzw. Fetten erhalten werden, sind erfindungsgemäß gut geeignet.

Das in der erfindungsgemäßen Mischung enthaltene Alkalisalz einer ungesättigten Fettsäure ist vorzugsweise das Natrium- oder Kaliumsalz der Öl-, Linol und/oder Linolensäure. Besonders bevorzugt ist Natriumoleat. Auch hier sind Gemische, wie sie aus natürlichen Ölen oder Fetten erhalten werden, ebenso geeignet.

Anstelle der Alkalisalze können auch Ammoniumsalze verwendet werden, sofern der bei der Verarbeitung und Aushärtung freigesetzte Ammoniak nicht stört.

In der Mischung sind bevorzugt 0,01 bis 0,2 Gew.-% Alkali- oder Erdalkali- oder Aluminiumsalz einer Fettsäure, insbesondere 0,05 bis 0,15 Gew.-%, und 0,01 bis 0,2 Gew.-% Alkalisalz einer ungesättigten Fettsäure, insbesondere 0,05 bis 0,15 Gew.-%, bezogen auf den Zement enthalten. Es können auch Mengen von mehr als 0,2 % beispielsweise 0,5 % eingesetzt werden, jedoch ist dies aus Kostengründen nicht bevorzugt.

In einer besonders bevorzugten Ausführungsform enthält die Mischung Zement, 0,05 % Calciumstearat und 0,05 % Natriumoleat.

In einer weiteren bevorzugten Ausführungsform enthält die erfindungsgemäße Mischung zusätzlich einen Luftporenbildner, insbesondere ein Tensid und ganz besonders bevorzugt Natriumlaurylsulfat. Der Luftporenbildner wird vorzugsweise in Mengen von 0,001 bis 0,1 Gew.-% zugefügt. Solche Mischungen eignen sich besonders, wenn es auf gute Frostbeständigkeit ankommt.

In einer weiteren bevorzugten Ausführungsform kann ein plastifizierendes Betonzusatzmittel, bevorzugt auf Basis von Polycarboxylaten, zugesetzt sein. Die Menge beträgt vorzugsweise 0,01 bis 0,5 Gew.-%. Durch das plastifizierende Betonzusatzmittel wird die Verarbeitbarkeit der erdfeuchten Betone verbessert.

Weiterhin können auch ein oder mehrere andere übliche Zusätze insbesondere Fließmittel, Erhärtungsverzögerer, Erhärtungsbeschleuniger, Wasserrückhaltemittel und andere Zusatzmittel enthalten sein.

Mit den erfindungsgemäßen Mischungen können ohne aufwändige Dosierung oder Oberflächenbehandlung hydrophobe Bauteile bzw. Bauwerke erstellt werden. Insbesondere lassen sich Betonwaren herstellen, die aufgrund ihrer geringen kapillaren Wasseraufnahme eine verminderte Ausblühneigung im Vergleich zu Betonwaren aus Zement ohne die erfindungegemäßen Hydrophobierungsmittel zeigen.

Der neu entwickelte Zement besitzt - im Vergleich zu den bisher eingesetzten Zementen - eine verbesserte Verarbeitbarkeit. Die Dauerhaftigkeit ist nicht vermindert. Er ist sowohl für die Herstellung von grauen als auch eingefärbten Betonwaren geeignet.

Die folgenden Beispiele sollen die Erfindung weiter erläutern, ohne sie jedoch auf die beschriebenen Ausführungsformen zu begrenzen. Alle Anteilsangaben, z.B. Prozentangaben, beziehen sich auf das Gewicht, sofern nichts anderes angegeben ist.

### Beispiel 1

Probekörper mit der Abmessung d=50mm und h=60mm wurden gemäß der folgenden Rezeptur hergestellt:
1 Teil Zement Portlandzement CEM I 42,5 R
3,5 Teile Sand

Das Wasser/Zement-Verhältnis betrug 0,36. Es wurde jeweils ein Probekörper mit 30 Verdichtungsschlägen und einer mit 60 Verdichtungsschlägen hergestellt.

Analog wurden Probekörper aus einem erfindungsgemäßen Zement mit folgender Rezeptur und einem Wasser/Zement-Verhältnis von 0,38 hergestellt::
1 Teil Hochofenzement CEM III/A 52,5 N
3,5 Teile Sand
0,03 Teile Calciumstearat
0,03 Teile Natriumoleat
0,03 Teile Natriumlaurylsulfat

Der Probekörper aus erfindungsgemäßem Zement wurde mit 60 Verdichtungsschlägen hergestellt.

Anschließend wurden beide Probekörper für 24 Stunden bei 20°C/65%r.F. gelagert. Zur Prüfung lagerten die Probekörper für 4 Wochen in einem 1 cm hohem Wasserbad.

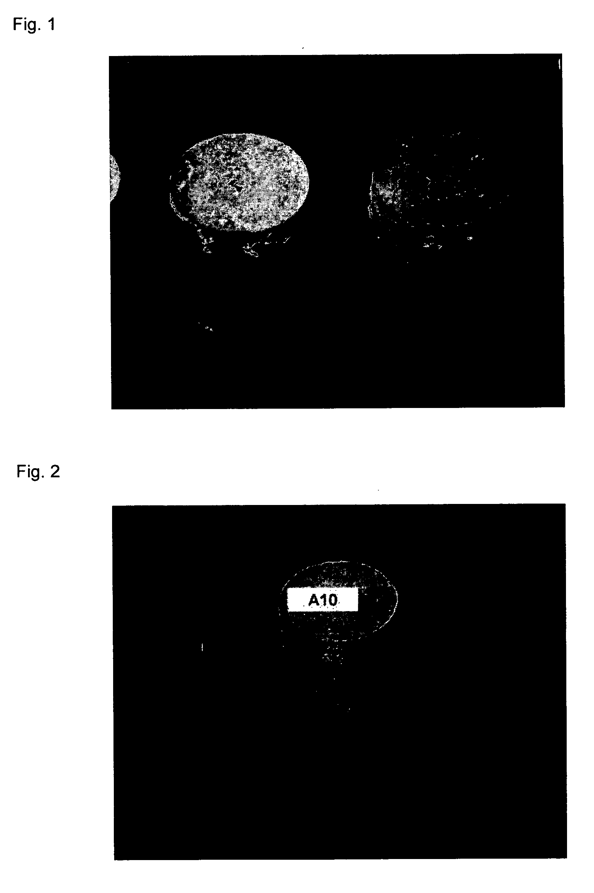

Abbildung 1 zeigt die beiden Probekörper mit herkömmlichem Zement, links mit 30, rechts mit 60 Verdichtungsschlägen. Man erkennt deutlich die Ausblühungen.

In Figur 2 ist der Probekörper aus erfindungsgemäßem Zement gezeigt, er weist keinerlei sichtbare Ausblühungen auf.

### Beispiel 2

Die kapillare Wasseraufnahme wurde für Zemente mit verschiedenen Mengen Zusatzmitteln bestimmt. Hierzu wurde ein Zement der Sorte CEM III/A 52,5 N mit den in der Tabelle angegebenen Mengen an hydrophobierendem Zusatzmittel trocken gemischt, mit Wasser in einem Wasser/Zement-Verhältnis von 0,40 angemacht und zu Probekörpern geformt. Als hydrophobierendes Zusatzmittel wurden Natriumoleat und Calciumstearat im Verhältnis 1:1 eingesetzt. Die Probekörper wurden nach einer Aushärtungszeit von einem Tag 1 cm in Wasser gestellt und die Saughöhe nach 60 min bestimmt. Die kapillare Wasseraufnahme wurde über die Formel ω = Δm/(A.√t) errechnet, wobei:
- Δm =: Masse _{feucht} - Masse _{trocken}
- A =: Kontaktfläche zum Wasser
- t =: Prüfzeit

Die Ergebnisse sind in Tabelle 1 zusammengefasst.

**Tabelle 1**

| Hydrophobierendes Zusatzmittel Gew.-% bez. auf Zement | Rohdichte [g/cm³] | Saughöhe h H₂O [cm] | kapillare Wasseraufnahme ω [kg/m²h^{0,5}] |
|---|---|---|---|
| 0,60 | 2,09 | 1,0 | 0,1 |
| 0,50 | 2,09 | 1,0 | 0,1 |
| 0,40 | 2,09 | 1,0 | 0,1 |
| 0,30 | 2,08 | 1,0 | 0,1 |
| 0,20 | 2,08 | 1,0 | 0,3 |
| 0,10 | 2,08 | 1,0 | 0,4 |
| 0,08 | 2,08 | 1,5 | 1,0 |
| 0,05 | 2,09 | 1,5 | 1,5 |
| 0,03 | 2,09 | 2,5 | 2,7 |
| 0,00 | 2,08 | > 5 | 7,1 |

Bereits mit 0,1 % hydrophobierendem Zusatzmittel ist eine hervorragende Hydrophobierung des Mörtels gegeben.

### Beispiel 3

Analog zu Beispiel 2 wurde für einen Zement der Sorte CEM I 42,5 R die Rohdichte und die kapillare Wasseraufnahme bei Zusatz verschiedener Mengen hydrophobierendes Zusatzmittel und Luftporenbildner bestimmt. Mörtelrezeptur: Zement: Sand = 1:3,5 ; w/z Wert = 0,40. Die Ergebnisse gibt Tabelle 2 an.

**Tabelle 2**

| Hydrophobiere ndes Zusatzmittel Gew.-% bez. auf Zement | Luftporenbildner Gew.-% bez. auf Zement | Rohdichte [g/cm³] | Saughöhe h H₂O [cm] | kapillare Wasseraufnahme ω [kg/m²h^{0,5}] |
|---|---|---|---|---|
| -- | -- | 2,07 | > 5 | 5,7 |
| 0,04% | -- | 2,06 | 2,0 | 1,4 |
| 0,04% | 0,03 | 2,08 | 1,0 | 0,8 |
| 0,04% | 0,05 | 2,09 | < 1,0 | 0,6 |
| 0,06% | -- | 2,07 | 1,5 | 0,9 |
| 0,06% | 0,03 | 2,08 | 1,0 | 0,6 |
| 0,06% | 0,05 | 2,09 | < 1,0 | 0,5 |
| 0,10% | -- | 2,07 | 1,0 | 0,6 |

Man erkennt, dass durch den erfindungsgemäß bevorzugten Zusatz eines Luftporenbildners eine weitere Reduktion der Menge an Zusatzmitteln erreichbar ist, ohne die Wasseraufnahmewerte zu verschlechtern.

Zum Vergleich wurde die Wirkung gleicher Mengen eines handelsüblichen hydrophobierenden Betonzusatzmittels mit Natriumoleat als Wirkstoff bestimmt. Die Ergebnisse gibt Tabelle 3 an.

**Tabelle 3**

| Handelsübliches hydrophobierendes Betonzusatzmittel Gew.-% bez. auf Zement | Rohdichte [g/cm³] | Saughöhe h H₂O [cm] | kapillare Wasseraufnahme ω [kg/m²h^{0,5}] |
|---|---|---|---|
| -- | 2,07 | > 5 | 5,7 |
| 0,10% | 2,08 | 3,5 | 2,2 |
| 0,25% | 2,09 | 2,5 | 1,2 |
| 0,50% | 2,09 | 1,5 | 0,9 |

Um mit handelsüblichen Zusätzen vergleichbare Wasseraufnahmewerte zu erhalten wie für die erfindungsgemäßen Zemente werden erheblich höhere Mengen benötigt, nämlich 0,5 %.

In Tabelle 4 sind die Daten für einen Zement aufgelistet, bei dem Zementklinker und Stearinsäure als hydrophobierendes Zusatzmittel gemeinsam vermahlen wurden.

**Tabelle 4**

| Stearinsäure Gew.-% bez. auf Zement | Rohdichte [g/cm³] | Saughöhe h H₂O [cm] | kapillare Wasseraufnahme ω [kg/m²h^{0,5}] |
|---|---|---|---|
| -- | 2,07 | > 5 | 5,7 |
| 0,04% | 2,09 | 3,0 | 2,7 |
| 0,06% | 2,08 | 3,0 | 2,3 |
| 0,10% | 2,08 | 3,0 | 2,2 |
| 0,15% | 2,09 | 2,0 | 1,6 |
| 0,20% | 2,10 | 1,0 | 0,5 |

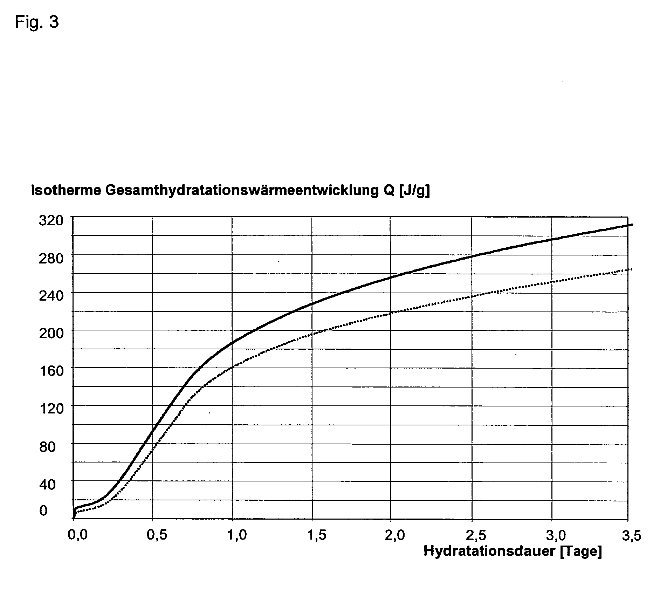

Die benötigte Menge an Hydrophobierungsmittel ist zwar ähnlich zu den erfindungsgemäßen, jedoch ist ein solcher Zement an sich hydrophob, was Abbindeverhalten und Verarbeitung negativ beeinflußt. Dies lässt sich auch der Figur 3 entnehmen, in welcher für einen erfindungsgemäßen Zement mit trocken zugesetztem Hydrophobierungsmittel und einen Zement mit hydrophobierten Zementpartikeln die isotherme Gesamthydratationswärmeentwicklung dargestellt ist. Beide Zemente waren auf Basis eines CEM I 42,5 R so eingestellt, dass gemäß Beispiel 2 hergestellte Probekörper eine kapillare Wasseraufnahme von 0,5 bis 0,6 kg/m²h^{0,5} aufwiesen. Die Werte des erfindungsgemäßen Zement sind als durchgezogene Linie, diejenigen des hydrophobierten Zements als gepunktete Linie dargestellt.

Man erkennt deutlich, dass die Hydratationswärme und damit auch die Abbindereaktion bei dem Zement mit hydrophobierten Zementpartikeln geringer ist. Durch den erfindungsgemäßen Zement ist im Ergebnis ein schnelleres Abbinden bei gleichem Schutz gegen Ausblühungen bzw. eine besserer Schutz gegen Ausblühungen bei gleich schnellem Abbinden möglich.

## Patentansprüche

1. Zement enthaltend ein Hydrophobierungsmittel, **dadurch gekennzeichnet, dass** das Hydrophobierungsmittel eine Kombination aus einem Alkali- oder Erdalkali- oder Aluminiumsalz einer Fettsäure und einem Alkalisalz einer ungesättigten Fettsäure ist und nach dem Vermahlen des hydraulischen Bindemittels trocken zugesetzt ist.

2. Zement gemäß Anspruch 1, **dadurch gekennzeichnet, dass** das Hydrophobierungsmittel eine Kombination aus einem Alkali- oder Erdalkali- oder Aluminiumsalz einer gesättigten, unverzweigten Fettsäure mit 12 bis 18 C-Atomen und einem Alkalisalz einer ungesättigten Fettsäure ist.

3. Zement gemäß Anspruch 1 oder 2, **dadurch gekennzeichnet, dass** das Hydrophobierungsmittel aus Natriumoleat und Calciumstearat besteht.

4. Zement gemäß einem der Ansprüche 1 bis 3, **dadurch gekennzeichnet, dass** zusätzlich ein Luftporenbildner, insbesondere ein Tensid, enthalten ist.

5. Zement gemäß einem der Ansprüche 1 bis 4, **dadurch gekennzeichnet, dass** zusätzlich ein plastifizierendes Betonzusatzmittel und/oder ein oder mehrere weitere übliche Zusatzmittel enthalten sind.

6. Zement gemäß Anspruch 5, **dadurch gekennzeichnet, dass** Polycarboxylatether enthalten sind.

7. Zement gemäß einem der vorhergehenden Ansprüche, **dadurch gekennzeichnet, dass** der Zement neben Klinker und Calciumsulfat weitere Komponenten enthält, ausgewählt unter Hüttensand, Flugasche Silicastaub, natürliches oder getempertes Puzzolan, Kalkstein und Gemischen von zwei oder mehreren davon.

8. Verfahren zur Herstellung von Zement zur Erzeugung von hydrophobierten Bauteilen oder Bauwerken aus Beton, wobei Zementklinker und optional weitere Zusatzstoffe vermahlen werden, gewünschtenfalls ein oder mehrere weitere übliche Zusatzmittel zugemischt werden und dem Zement ein bei Umgebungstemperatur festes Hydrophobierungsmittel nach der Mahlung und vor der Abfüllung bzw. Verladung trocken zugemischt wird.

9. Verfahren gemäß Anspruch 8, **dadurch gekennzeichnet, dass** als Hydrophobierungsmittel eine Kombination aus einem Alkali- oder Erdalkali- oder Aluminiumsalz einer Fettsäure und einem Alkalisalz einer ungesättigten Fettsäure verwendet wird.
